# EUROPÄISCHE PATENTSCHRIFT

(11) **EP 3 342 536 B1**
(45) Veröffentlichungstag und Bekanntmachung des Hinweises auf die Patenterteilung: **21.08.2019**
(21) Anmeldenummer: 17209394.0
(22) Anmeldetag: 21.12.2017
(51) Int. Cl.: B24B 23/02, B24B 47/26, B24B 55/00

(54) **ELEKTROHANDWERKZEUGMASCHINE**
ELECTRIC HAND-HELD MACHINE TOOL
MACHINE-OUTIL À MAIN ÉLECTRIQUE

(30) Priorität: 28.12.2016 DE 102016125765
(43) Veröffentlichungstag der Anmeldung: 04.07.2018
(73) Patentinhaber: Metabowerke GmbH, 72622 Nürtingen (DE)
(72) Erfinder: Küther, Ludwig, 71111 Waldenbuch (DE)
(74) Vertreter: Markfort, Iris-Anne Lucie

(56) Entgegenhaltungen:
- EP-A1- 2 992 755
- EP-A2- 2 364 811
- DE-A1- 3 741 536
- DE-A1-102012 218 197

## Beschreibung

Die vorliegende Erfindung betrifft eine Elektrohandwerkzeugmaschine, insbesondere einen Winkelschleifer oder dergleichen, umfassend eine mittels eines manuellen Betätigungselements durch einen Anwender ein- und ausschaltbare Antriebseinheit mit einer Ankerwelle sowie eine Bremseinrichtung zum Abbremsen der Ankerwelle nach einem Ausschalten der Antriebseinheit. Die Bremseinrichtung umfasst eine Bremsscheibe, die drehbar mit der Ankerwelle verbunden ist, eine Gegenbremsscheibe, die unverdrehbar in einem Gehäuseteil der Elektrohandwerkzeugmaschine gehalten und mittels eines elastischen Rückstellelements in Richtung auf die Bremsscheibe federnd vorgespannt ist, sowie eine Kopplungsvorrichtung, die das manuelle Betätigungselement mit der Gegenbremsscheibe koppelt. Eine gattungsgemässe Vorrichtung ist z.B. aus DE 10 2012 218 197 A1 bekannt.

Derartige Elektrohandwerkzeugmaschinen sind aus dem Stand der Technik bereits bekannt. So beschreibt beispielsweise die Europäische Patentanmeldung EP 1 938 924 A1 der Anmelderin ein Elektrohandwerkzeuggerät mit einer Bremseinrichtung zum Abbremsen der Antriebswelle nach Abschalten des Geräts, wobei die Bremseinrichtung durch eine mechanische Kopplung mit einem manuell betätigbaren Stellmittel des Geräts gelöst bzw. aktiviert wird, wobei die Bremseinrichtung eine erste mit der Antriebswelle drehfeste Bremsscheibe und eine nicht drehende Gegenbremsscheibe umfasst, die in Richtung auf die Bremsscheibe federvorgespannt ist. Die Besonderheit bei dieser Lösung besteht darin, dass die Gegenbremsscheibe von einem flächenhaft im Wesentlichen in einer Ebene parallel zur Ebene der Gegenbremsscheibe erstreckten Betätigungsorgan entgegen der Federvorspannung in Freigaberichtung bewegbar ist und das flächenhafte Betätigungsorgan hierfür bezüglich der genannten Ebene um einige Grad verkippbar ist.

Bei dieser Lösung ist weiterhin die Bremseinrichtung zwischen der Antriebseinheit und einem Winkelgetriebe des als Winkelschleifer ausgebildeten Elektrohandwerkzeuggeräts angeordnet. Dementsprechend findet sich auch der Schieber, welcher als manuelles Betätigungselement durch einen Anwender fungiert, im vorderen (werkzeugnahen) Gehäusebereich des Elektrohandwerkzeuggeräts, d.h. nahe dem Getriebegehäuse.

Eine weitere aus dem Stand der Technik bekannte Lösung eines Winkelschleifers mit Bremseinrichtung ist in der Deutschen Offenlegungsschrift DE 37 22 629 A1 beschrieben. Diese offenbart einen Winkelschleifer mit einer Bremsvorrichtung zum Bremsen des Motors, die der Antriebseinheit vorgelagert ist, d.h. an einer von dem Winkelgetriebe abgewandten Seite der Antriebseinheit angeordnet ist. Bei dieser Lösung wird die Bremseinrichtung dadurch deaktiviert, dass das manuelle Betätigungselement, welches zum Einschalten der Antriebseinheit dient, zugleich über eine Kopplungsvorrichtung die Gegenbremsscheibe außer Eingriff mit der Bremsscheibe bringt. Bei einer speziellen Ausführungsform kann zusätzlich noch eine Einschaltsperre vorgesehen sein, die über ein separates Betätigungselement von einem Anwender manuell betätigt werden kann und verhindert, dass dann, wenn die Bremseinrichtung aktiviert ist, eine Aktivierung der Antriebseinheit über das manuelle Betätigungselement erfolgen kann.

Dieses zusätzliche Sicherheitsmerkmal hat sich in der Praxis beim Anwender durchaus bewährt, jedoch ergibt sich durch das Vorsehen mehrerer Schalter bzw. Betätigungselemente eine höhere Komplexität des Aufbaus der Elektrohandwerkzeugmaschine. Zudem wird auch die Bedienung durch den Anwender aufgrund der notwendigen Betätigung zweier manueller Betätigungselemente als weniger komfortabel empfunden.

Weitere Lösungen aus dem Stand der Technik sind in den Druckschriften DE 10 2008 030 632 A1, DE 10 2011 076 370 A1 und DE 10 2012 218 197 A1 beschrieben.

Demgemäß besteht eine Aufgabe der vorliegenden Erfindung darin, die bekannten Vorteile der aus dem Stand der Technik bekannten Lösungen beizubehalten und zugleich die bekannt gewordenen Nachteile zu verringern.

Diese Aufgabe wird vorliegend durch eine Elektrohandwerkzeugmaschine mit den Merkmalen des Anspruchs 1 gelöst. Demgemäß umfasst das manuelle Betätigungselement selbst eine Einschaltsperre, die in einer ersten Schaltposition des Betätigungselements, in der die Gegenbremsscheibe an der Bremsscheibe anliegt, ein Einschalten der Antriebseinheit verhindert, und in einer zweiten Schaltposition des Betätigungselements, in der die Gegenbremsscheibe von der Bremsscheibe gelöst ist, ein Einschalten der Antriebseinheit ermöglicht.

Somit vereint bei dieser erfindungsgemäßen Lösung das manuelle Betätigungselement mehrere Funktionen in sich. So dient dieses zum Ein- und Ausschalten der Antriebseinheit durch einen Anwender. Zugleich wird hierüber aber auch die Bremseinrichtung (über die Kopplungsvorrichtung, die das manuelle Betätigungselement mit der Gegenbremsscheibe koppelt) aktiviert bzw. deaktiviert, so dass die Gegenbremsscheibe an der Bremsscheibe anliegt oder von dieser gelöst ist. Schließlich fungiert das manuelle Betätigungselement auch als Einschaltsperre und verhindert in Abhängigkeit von seiner Schaltposition ein Einschalten der Antriebseinheit oder nicht. Auf diese Weise kann zum einen gewährleistet werden, dass die Antriebseinheit nicht dann schon eingeschaltet wird, wenn die Bremseinrichtung noch in einem aktivierten Zustand ist, d.h. die Gegenbremsscheibe an der Bremsscheibe anliegt. Dies ist vorteilhaft, da die Antriebseinheit somit nicht gegen die Bremseinrichtung wirken muss und auf diese Weise sowohl die Lebensdauer der Bremseinrichtung, als auch die der Antriebseinheit erhöht wird. Erst dann, wenn die Bremseinrichtung deaktiviert wurde, d.h. die Gegenbremsscheibe von der Bremsscheibe gelöst wurde, in dem das manuelle Betätigungselement aus seiner ersten Schaltposition in seine zweite Schaltposition gebracht wurde, ermöglicht die Einschaltsperre des Betätigungselements ein Einschalten der Antriebseinheit mit Hilfe des manuellen Betätigungselements. Die Funktionsvereinigung in einem einzigen manuellen Betätigungselement erhöht signifikant den Komfort für den Anwender, ohne die bekannten Vorteile einer erhöhten Sicherheit der Bedienung zu verringern. Weiterhin ist auch der Aufbau der Elektrohandwerkzeugmaschine durch die Funktionsvereinigung mehrerer Funktionen in einem einzigen manuellen Betätigungselement weniger komplex.

Gemäß der Erfindung kann zudem vorgesehen sein, dass das manuelle Betätigungselement dazu ausgelegt ist, eine kombinierte Schaltbewegung umfassend eine erste, insbesondere translatorische, Schaltbewegung zwischen der ersten und zweiten Schaltposition und eine zweite, insbesondere rotatorische Schaltbewegung in eine dritte Schaltposition, in der das Betätigungselement die Antriebseinheit einschaltet, zu vollziehen. Selbstverständlich kann die Schaltbewegung zwischen der ersten und der zweiten Schaltposition auch eine rotatorische Schaltbewegung umfassen und gegebenenfalls umgekehrt die Schaltbewegung in eine dritte Schaltposition eine translatorische Schaltbewegung umfassen. Die Schaltbewegungen können sequenziell erfolgen oder als überlagerte Schaltbewegungen vorgesehen sein. Dabei kann beispielsweise das manuelle Betätigungselement als Schalterdrücker ausgebildet sein, der zugleich, neben einer Schwenkbewegung auch eine translatorische Bewegung ausführen kann. Hierfür kann der Schalterdrücker beispielsweise schwimmend gelagert sein und innerhalb eines bestimmten Translationswegs spielbehaftet oder spielfrei geführt sein, so dass, bedingt durch ein vorgesehenes Spiel, zeitgleich zur Translationsbewegung eine geringfügige Schwenkbewegung oder keine Schwenkbewegung möglich ist. In einer vorgegebenen Schaltposition (beispielsweise der zweiten Schaltposition) kann gegebenenfalls ein Anschlag als Lagerpunkt fungieren, um den der Schalterdrücker verschwenkbar ist. Der Anschlag kann zusätzlich auch als Begrenzung der Translationsbewegung bzw. des Translationswegs dienen.

Weiterhin kann vorgesehen sein, dass das manuelle Betätigungselement in der dritten Schaltposition mit einem elektrischen Schalter zusammenwirkt, um das Einschalten der Antriebseinheit zu bewirken. Dabei kann der elektrische Schalter in bekannter Weise einen Schaltstift oder dergleichen umfassen, der mit einer Anlagefläche an dem manuellen Betätigungselement in Eingriff gelangen kann und von diesem betätigt werden kann, z.B. in den Schalter hineingedrückt werden kann, um dort bei einer bestimmten Stellung ein Anlaufen der Antriebseinheit auszulösen.

Weiterhin kann vorgesehen sein, dass die Einschaltsperre wenigstens einen Vorsprung umfasst, der einer Schaltbewegung aus der ersten Schaltposition in die dritte Schaltposition entgegenwirkt. Die erste Schaltposition ist definitionsgemäß eine solche Schaltposition des manuellen Betätigungselements, bei der die Bremseinrichtung aktiviert ist, d.h. die Gegenbremsscheibe an der Bremsscheibe anliegt. In dieser Position soll durch die Einschaltsperre verhindert werden, dass die Antriebseinheit aktiviert werden kann. Dadurch, dass ein direktes Durchschalten in die dritte Schaltposition mittels der Einschaltsperre verhindert wird, wird sichergestellt, dass dieser unerwünschte Zustand, d.h. ein Einschalten der Antriebseinheit mittels des manuellen Betätigungselements bei noch aktivierter Bremseinrichtung sicher unterbunden wird.

Weiterhin kann vorgesehen sein, dass die Einschaltsperre mit einem gehäusefesten Vorsprung eines Gehäuseteils der Elektrohandwerkzeugmaschine zum Sperren einer Schaltbewegung aus der ersten Schaltposition in die dritte Schaltposition zusammen zu wirken vermag. So kann ein Vorsprung an einem Innenumfang des Gehäuseteils der Elektrohandwerkzeugmaschine vorgesehen sein, der die Schaltbewegung sperrt, in dem ein korrespondierender Teil des manuellen Betätigungselements in Anlage an diesen Vorsprung gelangt und einer weiteren Schaltbewegung aus der ersten Schaltposition in die dritte Schaltposition entgegenwirkt.

Unabhängig von der spezifischen Ausgestaltung der Einschaltsperre kann weiterhin vorgesehen sein, dass das Betätigungselement wenigstens ein elastisches Rückstellelement umfasst, das dieses in Richtung auf seine erste Schaltstellung vorspannt. Insbesondere kann zusätzlich zu dem elastischen Rückstellelement der Bremseinrichtung, welches über die Kopplungsvorrichtung ebenfalls auf das Betätigungselement einzuwirken vermag, ein weiteres elastisches Rückstellelement vorgesehen sein, das beispielsweise eine Rückstellung aus der dritten Schaltposition in die zweite Schaltposition ermöglicht.

Sowohl das elastische Rückstellelement der Bremseinrichtung als auch das elastische Rückstellelement des Betätigungselements können als Druckfedern ausgebildet sein. Alternative Ausgestaltungsmöglichkeiten, beispielweise als Gummielement oder dergleichen sind selbstverständlich ebenfalls denkbar. Grundsätzlich ist es auch denkbar, dass nur das elastische Rückstellelement der Bremseinrichtung vorgesehen ist und die hierdurch eingeleitete translatorische Rückstellbewegung über die Kopplungsvorrichtung in eine entsprechende überlagerte Rückstellbewegung am Betätigungselement umgewandelt wird. Darüber hinaus kann auch mit rampenförmigen Vorsprüngen oder dergleichen gearbeitet werden, um die Rückstellbewegung des elastischen Rückstellelements der Bremseinrichtung zur Rückstellung des Betätigungselements zu nutzen.

Es kann weiterhin vorgesehen sein, dass die Bremseinrichtung, insbesondere die Bremsscheibe und/oder die Gegenbremsscheibe, im Übergangsbereich von einem ersten Gehäuseteil, insbesondere dem Griffgehäuse, und einem zweiten Gehäuseteil, insbesondere dem Antriebsgehäuse, der Elektrohandwerkzeugmaschine angeordnet ist.

Üblicherweise setzt sich das Gehäuse einer Elektrohandwerkzeugmaschine, beispielsweise eines Winkelschleifers, aus mehreren Gehäuseteilen zusammen. Dabei werden die Gehäuseteile in der Regel gemäß der darin aufgenommenen Funktionsbaugruppen benannt, beispielsweise Getriebegehäuseteil, Antriebsgehäuseteil und Griffgehäuseteil. Selbstverständlich können diese Gehäuseteile ihrerseits nochmal mehrfach unterteilt sein, beispielsweise wenn ein Griffgehäuse in Topfbauweise aufgebaut ist.

Weiterhin kann vorgesehen sein, dass im Übergangsbereich von dem ersten Gehäuseteil und dem zweiten Gehäuseteil eine Vibrationsdämpfung vorgesehen ist. Dies ist insbesondere dann von Vorteil, wenn das erste Gehäuseteil beispielsweise durch das Griffgehäuse gebildet wird und das zweite Gehäuseteil beispielsweise durch das Antriebsgehäuse, da sich hierdurch Vibrationen vom Antriebsgehäuse (die von der darin aufgenommenen Antriebseinheit erzeugt werden) nicht oder nur im verringerten Maße auf den Griff übertragen und auf diese Weise der Komfort für einen Anwender beim Arbeiten mit dem Elektrohandwerkzeuggerät signifikant erhöht wird. Beispielsweise kann eine solche Vibrationsdämpfung durch ein zwischeneingelegtes Gummiteil erreicht werden, dass die Vibrationsübertragung von dem zweiten Gehäuseteil auf das erste Gehäuseteil signifikant dämpft.

Alternativ oder zusätzlich kann vorgesehen sein, dass das erste Gehäuseteil gegenüber dem zweiten Gehäuseteil um einen vorgegebenen Winkel verdrehbar angeordnet ist. Beispielsweise kann die Verbindung der Gehäuseteile eine Verdrehbarkeit um die Längsachse der Antriebseinheit ermöglichen, in dem nur ein axialer Formschluss zwischen den Gehäuseteilen vorgesehen ist. Gegebenenfalls kann die Verdrehbarkeit auf einen Winkel von weniger als 360 º, beispielsweise auf 180º durch Anschläge beschränkt werden. Auch eine freie Verdrehbarkeit kann je nach Anwendung des Elektrohandwerkzeuggeräts vorteilhaft sein.

Durch eine Anordnung der Bremseinrichtung im Übergangsbereich wird in vorteilhafter Weise erreicht, dass verformungsbedingte Lageänderungen minimiert werden können. Eine Vibrationsdämpfung und/oder eine Verdrehbarkeit des Handgriffs bleiben zudem trotz dem Vorsehen einer Bremseinrichtung, die der Antriebseinheit vorgelagert ist, weiterhin möglich.

Es kann weiterhin vorgesehen sein, dass die Kupplungsvorrichtung unabhängig von der Gestaltung des Betätigungselements, der Einschaltsperre und auch der Gehäuseteile wenigstens einen Hebel zur Kraftübertragung von dem Betätigungselement auf die Gegenbremsscheibe umfasst. Insbesondere kann die Kopplungsvorrichtung wenigstens einen Kniehebel zur Kraftübertragung und Kraftuntersetzung von dem Betätigungselement auf die Gegenbremsscheibe umfassen. Schließlich kann vorgesehen sein, dass die Kopplungsvorrichtung wenigstens ein Kopplungsglied, insbesondere einen Kopplungsbolzen, umfasst, der die Kopplungsvorrichtung mit der Gegenbremsscheibe verbindet. Ein solcher Kopplungsbolzen kann teilweise oder vollständig rotationssymmetrisch ausgebildet sein, d.h. er kann insgesamt einen kreisrunden Querschnitt aufweisen oder Abschnitte mit kreisrundem Querschnitt und/oder Abschnitte mit beispielsweise polygonförmigem Querschnitt aufweisen.

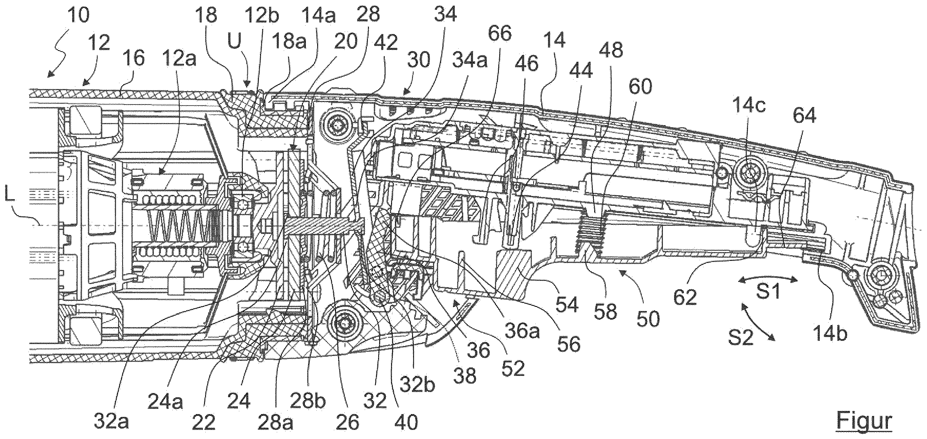

Weitere Merkmale und Vorteile der Erfindung ergeben sich aus der nachfolgenden Beschreibung eines Ausführungsbeispiels der Erfindung sowie aus den Unteransprüchen. In der Figur ist ein Ausführungsbeispiel der Erfindung gezeigt, bei dem einzelne Merkmale der Erfindung in Kombination miteinander dargestellt sind. Selbstverständlich vermag der Fachmann diese Merkmale auch losgelöst voneinander zu betrachten und gegebenenfalls zu weiteren sinnvollen Unterkombinationen zu kombinieren, ohne dass er hierfür erfinderisch tätig werden müsste.

Die Figur zeigt schematisch teilweise einen Längsschnitt durch eine erfindungsgemäße Elektrohandwerkzeugmaschine.

In der Figur ist eine Elektrohandwerkzeugmaschine gemäß der vorliegenden Erfindung gezeigt, die als Winkelschleifer ausgebildet und allgemein mit dem Bezugszeichen 10 bezeichnet ist. Der in der Figur gezeigte Ausschnitt ist in Längsschnittdarstellung abgebildet, wobei die Schnittebene die Längsachse L der Antriebseinheit 12 der Elektrohandwerkzeugmaschine 10 enthält. Nicht dargestellt sind vorliegend der vordere Teil der Elektrohandwerkzeugmaschine 10, d.h. im Falle eines Winkelschleifers die Werkzeugspindel, das Winkelgetriebe und die antriebsseitige Antriebswelle.

Die vorliegende Elektrohandwerkzeugmaschine umfasst neben ihrer Antriebseinheit 12, von der nur der hintere, d.h. dem Handgriff zugewandte Teil, gezeigt ist, ein aus mehreren Gehäuseteilen bestehendes Gehäuse. So ist vorliegend ein Griffgehäuse 14 gezeigt sowie ein damit verbundenes Antriebsgehäuseteil 16. Sowohl das Griffgehäuseteil 14 als auch das Antriebsgehäuseteil 16 können jeweils mehrteilig, insbesondere in Halbschalenbauweise mit zwei Teilen, ausgebildet sein. Alternative Ausgestaltungsmöglichkeiten sind jedoch ebenfalls denkbar. Wie in der Figur deutlich zu erkennen ist, überlappen die beiden Gehäuseteile 14, 16 in einem Übergangsbereich U und sind in diesem über ein zwischengeschaltetes elastisches Element 18, das als Vibrationsdämpfung fungiert, miteinander verbunden. Weiterhin ist außenseitig an dem elastischen Element 18 eine Eingriffsstruktur 18a angebracht, in die eine korrespondierende Gegeneingriffsstruktur 14a des Griffgehäuseteils 14 formschlüssig eingreift. Durch die spezifische Ausgestaltung dieser Strukturen 14a und 18a ist eine relative Verdrehung des Handgriffteils 14 gegenüber dem Antriebsgehäuseteil 12 um die Längsachse L möglich.

Im Inneren des Antriebsgehäuseteils 16 erstreckt sich von der Antriebseinheit 12 nach hinten, d.h. in Richtung zu dem Griffgehäuse 14, die Ankerwelle 12a, die drehbar gelagert ist (vgl. Lager 12b). Mit der Ankerwelle drehfest verbunden ist vorliegend eine Bremsscheibe 22 einer Bremseinrichtung 20, welche ebenfalls im Übergangsbereich U der Gehäuseteile 14, 16 angeordnet ist. Eine Gegenbremsscheibe 24 ist in Richtung der Längsachse L relativ zu der Bremsscheibe 22 verschiebbar und kann auf diese Weise in Anlage mit dieser gebracht werden oder von dieser gelöst werden. Weiter umfasst die Bremseinrichtung 20 ein elastisches Rückstellelement in Form einer Druckfeder 26, die sich beidseitig an einer Halterung 28 abstützt. Die Halterung 28 umfasst dabei ein gehäusefestes Federhalteblech 28b sowie einen Federteller 28a, der an der Gegenbremsscheibe 24 anliegt. Das elastische Rückstellelement in Form der Druckfeder 26 spannt in bekannter Weise die Gegenbremsscheibe 24 in Richtung auf die Bremsscheibe 22 vor, so dass ohne äußere Krafteinflüsse die Gegenbremsscheibe 24 in Anlage an der Bremsscheibe 22 gehalten wird.

Über eine Kopplungseinrichtung 30 ist die Bremseinrichtung 20 mit einem manuellen Betätigungselement 50 zur manuellen Betätigung durch einen Anwender verbunden. Die Kopplungseinrichtung 30 umfasst ihrerseits einen Kopplungsbolzen 32 mit einem Kopplungsfuß 32a und einem Kopplungskopf 32b. Der Kopplungsbolzen 32 erstreckt sich durch entsprechende Öffnungen in der Gegenbremsscheibe 24, dem Federteller 28a durch die Druckfeder 26 und das Federhalteblech 28b bis in eine Ausnehmung 34a an einem ersten Hebelarm 34 der Kopplungsvorrichtung 30. Sowohl der Kopplungsfuß 32a, als auch der Kopplungskopf 32b sind derart ausgestaltet, dass sie das anliegende Bauteil, nämlich die Gegenbremsscheibe 24 bzw. den ersten Hebelarm 34 im Bereich ihrer Ausnehmungen 24a, 34a hintergreifen. Dabei kann insbesondere die Ausnehmung 34a als seitlich geöffneter Schlitz ausgebildet sein, um eine einfachere Montage zu ermöglichen. Wird der Bolzen infolge einer nachfolgend noch näher diskutierten Schwenkbewegung des ersten Hebelarms 34 in Richtung nach hinten (in der Figur nach rechts) gezogen, so wird die Gegenbremsscheibe 24 entgegen der Federkraft der Druckfeder 26 von der Bremsscheibe 22 gelöst (wie in der Figur dargestellt). Eine solche Bewegung wird von der Kopplungsvorrichtung 30 dann eingeleitet, wenn die Elektrohandwerkzeugmaschine 10 in Betrieb genommen werden soll.

Hierzu betätigt ein Anwender das manuelle Betätigungselement 50. Dieses wirkt in nachfolgend noch näher beschriebener Weise in Folge seiner Schaltbewegung auf ein freies Ende eines zweiten Hebelarms 36 ein, der vorliegend als Doppelhebel ausgebildet ist, welcher sich um einen angedeuteten gehäusefesten Drehpunkt 38 zu verschwenken vermag. Der erste Hebelarm 34 und der zweite Hebelarm 36 sind drehgelenkig in einem Drehpunkt 40 miteinander verbunden und wirken auf diese Weise in der Art eines Kniegelenks zusammen. Der erste Hebelarm 34 ist schließlich in einem weiteren gehäusefesten Lagerpunkt 42 verschwenkbar gelagert. Der Kopplungskopf 32b ist in der Art einer Kugelkalotte ausgebildet und auf diese Weise vergleichsweise lagetolerant, so dass der erste Hebelarm 34 auch bei einer leichten Verschwenkbewegung diese noch nicht als Schwenkbewegung auf den Kopplungsbolzen 32 zu übertragen vermag. Hierzu trägt auch die Ausgestaltung der Ausnehmung 34a bei, die derart bemessen ist, dass ausreichend Spiel zu dem Kopplungskopf 32b vorhanden ist, damit kein Biegemoment über den Kopplungskopf 32b in diesen eingeleitet wird.

Wie in der Figur zu erkennen ist, greifen die beiden Hebelarme 34 und 36 ineinander ein, was eine besonders platzsparende Ausnutzung des verfügbaren Bauraums im Inneren des Griffgehäuseteils 14 ermöglicht. Darüber hinaus sind die Lagerpunkte und die Kraftangriffspunkte derart gewählt, dass eine doppelte Übersetzung bzw. Untersetzung der eingeleiteten Betätigungskraft mit Hilfe der Kopplungsvorrichtung 30 erzielt wird.

Das bereits angesprochene Betätigungselement 50 ist als verschwenkbarer und verschiebbarer Schalterdrücker ausgebildet. Es umfasst u.a. eine Einschaltsperre 52, die ein unbeabsichtigtes Einschalten der Antriebseinheit 12 dann verhindert, wenn die Gegenbremsscheibe 24 sich noch in Anlage an der Bremsscheibe 22 befindet, d.h. dann, wenn über die Kopplungsvorrichtung 30 noch nicht ein Lösevorgang der Gegenbremsscheibe 24 von der Bremsscheibe 22 eingeleitet wurde. Weiterhin umfasst das manuelle Betätigungselement 50 einen Anlageabschnitt 54, der in Anlage mit einem elektrischen Schalter (mit Stift) 44 gebracht werden kann. Das manuelle Betätigungselement 50 weist zudem mehrere nach innen ragende, d.h. in das Innere des Griffgehäuses 14 ragende Vorsprünge 56, 58, 62, 64 und 66 auf, die wie nachfolgend näher erläutert wird, unterschiedliche Funktionen erfüllen.

Dabei dient der Vorsprung 56 als Einschaltsperre 52, indem er mit einem korrespondierenden Vorsprung 46 in einer ersten Schaltposition (Ausgangsposition des manuellen Betätigungselements bei ausgeschalteter Antriebseinheit) zusammenwirkt und eine Schwenkbewegung des manuellen Betätigungselements 50 in Richtung auf das Innere des Griffgehäuseteils 14 und in Richtung auf den elektrischen Schalter 44 verhindert. In dieser Position liegt der Anlageabschnitt des Schalterdrückers 54 nicht oder nur unvollständig an dem elektrischen Schalter 44 an. Ein elastisches Rückstellelement 60, das als Druckfeder 60 ausgebildet ist, die zwischen den Lagerdomen 48 und 58 angeordnet und über diese in ihrer Position gehalten wird, dient zur Rückstellung des Betätigungselements 50 in seine aus dem Gehäuseinneren ausgerückten Stellung.

Das Betätigungselement 50 kann aus seiner ersten Schaltposition, in der ein Führungsabschnitt 64, der sich im Wesentlichen in Richtung der Längsachse L in das Gehäuseinnere des Griffgehäuseteils 14 erstreckt, vollkommen in die entsprechende Gehäuseausnehmung 14b eingeschoben ist, in einer ersten Schaltbewegung S1 in eine zweite Schaltstellung (vgl. die Figur) geschoben werden. Die Gehäuseausnehmung 14b ist etwas größer in ihrer breiten Erstreckung als der Führungsabschnitt 64, so dass dieser innerhalb der Ausnehmung 14b mit Spiel geführt ist. Der Betätigungsschalter 50 kann nun aus dieser Position in translatorischer Richtung, d.h. in eine Richtung, die im Wesentlichen der Längsachse L entspricht, nach vorne in Richtung zu der Antriebseinheit 12 geschoben werden, bis sein Gegenanschlag 62 an einem Gehäuseinnerenanschlag 14c anschlägt, welcher zugleich als Drehpunkt für die weitere Verschwenkbewegung des Betätigungselements 50 dient. Die vorgeschobene Position des Betätigungselements 50 entspricht dabei einer zweiten Schaltposition, in der die Eingriffsperre 56 bereits außer Eingriff mit im korrespondierenden Vorsprung 46 des Gehäuseinneren des Griffgehäuseteils 14 verlagert wurde und in der ein Koppelanschlag 66 ein freies Ende 36a des zweiten Hebelarms 36 in Richtung zu der Antriebseinheit 12 verschiebt. Hierdurch wird die bereits beschriebene Lösebewegung der Gegenbremsscheibe 24 von der Bremsscheibe 22 über die Kopplungseinrichtung 30 bewirkt. In der zweiten Schaltstellung ist schließlich der Anlageabschnitt 54 des manuellen Betätigungselements 50 in Anlage an dem elektrischen Schalter 44 und kann nun bei einer weiteren Schaltbewegung S2 in das Innere des Griffgehäuseteils 14 gedrückt werden, wodurch der Stift des Schalters 44 gedrückt wird, was ein Einschalten der Antriebseinheit 12 zur Folge hat.

Solange das manuelle Betätigungselement 50 durch einen Anwender in der dritten Schaltposition gedrückt gehalten wird, wird die Antriebseinheit 12 in ihrem eingeschalteten Zustand belassen und die Bremseinrichtung 20 in einem deaktivierten Zustand gehalten. Löst nun der Anwender den festen Griff um das Griffgehäuseteil 14 und das Betätigungselement 50 und lässt damit zu, dass das elastische Rückstellelement in Form der Druckfeder 60 das Betätigungselement 50 in seine zweite Schaltposition zurückführt, wird die Antriebseinheit 12 ausgeschaltet. Zugleich veranlasst das elastische Rückstellelement in Form der Druckfeder 26 eine Rückstellung der Gegenbremsscheibe 24 in Richtung zu der Bremsscheibe 22, wodurch auch die Kopplungsvorrichtung 30 zurückgestellt wird und je nach Auslegung der Federstärke das manuelle Betätigungselement 50 in seine erste Schaltposition zurückgeschoben wird.

Durch die rückseitigen Anlagepunkte in der geöffneten Endposition des Betätigungselements 50 (erste Schaltposition) wird unabhängig von der Winkellage des ersten Hebelarms 34 der Kopplungsvorrichtung 30 eine Planlage der Gegenbremsscheibe 24 an der Bremsscheibe 22 erzeugt. Das Vorsehen eines Kniehebel als Teil der Kopplungsvorrichtung 30 ermöglicht weiterhin eine Verstärkung der Betätigungskraft und einen bauraumsparenden Aufbau. Die beiden Hebelarme 34, 36 vollziehen eine Wirkrichtungsumkehr, d.h. die Betätigungskraft, die von dem Betätigungselement 50 in Richtung zu der Antriebseinheit eingeleitet wird, wird zu einer Zugkraft am Kopplungsbolzen 32 umgewandelt. Dadurch, dass die Bremseinrichtung im Übergangsbereich der beiden Gehäuseteile 14 und 16 angeordnet ist, ist es möglich, sowohl die gezeigte Vibrationsdämpfung in Form des elastischen Elements 18 vorzusehen als auch eine relative Verdrehbarkeit der Gehäuseteile zueinander. Beide diese Zusatzfunktionen wirken sich nicht auf die Bremseinrichtung 20 aus. Somit wird insgesamt eine sehr vorteilhafte Elektrohandwerkzeugmaschine mit Bremseinrichtung bereitgestellt, die relevante Komfortvorteile und Sicherheitsvorteile miteinander vereint.

## Patentansprüche

1. Elektrohandwerkzeugmaschine (10), insbesondere Winkelschleifer oder dergleichen, umfassend:
eine mittels eines manuellen Betätigungselements (50) durch einen Anwender ein- und ausschaltbare Antriebseinheit (12) mit einer Ankerwelle,
eine Bremseinrichtung (20) zum Abbremsen der Ankerwelle nach einem Ausschalten der Antriebseinheit (12) mit einer Bremsscheibe (22), die drehfest mit der Ankerwelle verbunden ist, mit einer Gegenbremsscheibe (24), die unverdrehbar in einem Gehäuseteil (16) der Elektrohandwerkzeugmaschine (10) gehalten und mittels eines elastischen Rückstellelements (26) in Richtung auf die Bremsscheibe (22) federnd vorgespannt ist, und mit einer Kopplungsvorrichtung (30), die das manuelle Betätigungselement (50) mit der Gegenbremsscheibe (24) koppelt,
wobei das manuelle Betätigungselement (50) eine Einschaltsperre (52) umfasst, die in einer ersten Schaltposition des manuellen Betätigungselement (50), in der die Gegenbremsscheibe (24) an der Bremsscheibe (22) anliegt, ein Einschalten der Antriebseinheit (12) verhindert, und in einer zweiten Schaltposition des manuellen Betätigungselement (50), in der die Gegenbremsscheibe (24) von der Bremsscheibe (22) gelöst ist, ein Einschalten der Antriebseinheit (12) ermöglicht,
**dadurch gekennzeichnet, dass** das manuelle Betätigungselement (50) dazu ausgelegt ist, eine kombinierte Schaltbewegung umfassend eine erste, insbesondere translatorische, Schaltbewegung (S1) zwischen der ersten und zweiten Schaltposition und eine zweite, insbesondere rotatorische, Schaltbewegung (S2) in eine dritte Schaltposition, in der das Betätigungselement (50) die Antriebseinheit (12) einzuschalten vermag, zu vollziehen.

2. Elektrohandwerkzeugmaschine (10) nach Anspruch 1,
**dadurch gekennzeichnet, dass** das manuelle Betätigungselement (50) in der dritten Schaltposition mit einem elektrischen Schalter (44) zusammenwirkt, um das Einschalten der Antriebseinheit (12) zu bewirken.

3. Elektrohandwerkzeugmaschine (10) nach einem der Ansprüche 1 oder 2,
**dadurch gekennzeichnet, dass** die Einschaltsperre (52) wenigstens einen Vorsprung (46, 56) umfasst, der einer Schaltbewegegung aus der ersten Schaltposition in die dritte Schaltposition entgegenwirkt.

4. Elektrohandwerkzeugmaschine (10) nach einem der Ansprüche 1 bis 3,
**dadurch gekennzeichnet, dass** die Einschaltsperre (52) mit einem gehäusefesten Vorsprung (46) eines Gehäuseteils (14) der Elektrohandwerkzeugmaschine (10) zum Sperren einer Schaltbewegung aus der ersten Schaltposition in die dritte Schaltposition zusammenzuwirken vermag.

5. Elektrohandwerkzeugmaschine (10) nach einem der Ansprüche 1 bis 4,
**dadurch gekennzeichnet, dass** das Betätigungselement (50) wenigstens ein elastisches Rückstellelement (26, 60) umfasst, das dieses in Richtung auf seine erste Schaltstellung vorspannt.

6. Elektrohandwerkzeugmaschine (10) nach einem der Ansprüche 1 bis 5,
**dadurch gekennzeichnet, dass** die Bremseinrichtung (20), insbesondere die Bremsscheibe (22) und/oder die Gegenbremsscheibe (24), im Übergangsbereich (U) von einem ersten Gehäuseteil (14), insbesondere dem Griffgehäuse, und einem zweiten Gehäuseteil (16), insbesondere dem Antriebsgehäuse, der Elektrohandwerkzeugmaschine (10) angeordnet ist.

7. Elektrohandwerkzeugmaschine (10) nach Anspruch 6,
**dadurch gekennzeichnet, dass** im Übergangsbereich (U) von dem ersten Gehäuseteil (14) und dem zweiten Gehäuseteil (16) eine Vibrationsdämpfung (18) vorgesehen ist.

8. Elektrohandwerkzeugmaschine (10) nach Anspruch 6 oder 7,
**dadurch gekennzeichnet, dass** das erste Gehäuseteil (14) gegenüber dem zweiten Gehäuseteil (16) um einen vorgegebenen Winkel verdrehbar angeordnet ist.

9. Elektrohandwerkzeugmaschine (10) nach einem der Ansprüche 1 bis 8,
**dadurch gekennzeichnet, dass** die Kopplungsvorrichtung (30) wenigstens einen Hebel (34, 36) zur Kraftübertragung von dem Betätigungselement (50) auf die Gegenbremsscheibe (24) umfasst.

10. Elektrohandwerkzeugmaschine (10) nach einem der Ansprüche 1 bis 9,
**dadurch gekennzeichnet, dass** die Kopplungsvorrichtung (30) wenigstens einen Kniehebel (34, 36) zur Kraftübertragung und Kraftuntersetzung von dem Betätigungselement (50) auf die Gegenbremsscheibe (24) umfasst.

11. Elektrohandwerkzeugmaschine (10) nach einem der Ansprüche 1 bis 9,
**dadurch gekennzeichnet, dass** die Kopplungsvorrichtung (30) wenigstens ein Kopplungsglied (32), insbesondere einen Kopplungsbolzen, umfasst, der die Kopplungsvorrichtung (30) mit der Gegenbremsscheibe (24) verbindet.

## Claims

1. Portable electric power tool (10), in particular angle grinder or the like, comprising:
a drive unit (12), which is able to be switched on and off by a user by means of a manual actuating element (50), having an armature shaft,
a braking device (20) for braking the armature shaft after the drive unit (12) has been switched off, having a brake disc (22) that is connected to the armature shaft for conjoint rotation, having a counterpart brake disc (24) that is held in a non-rotatable manner in a housing part (16) of the portable electric power tool (10) and is resiliently preloaded in the direction of the brake disc (22) by means of an elastic return element (26), and having a coupling device (30) that couples the manual actuating element (50) to the counterpart brake disc (24),
wherein the manual actuating element (50) comprises a switch lock (52), which, in a first switching position of the manual actuating element (50) in which the counterpart brake disc (24) bears against the brake disc (22), prevents the drive unit (12) from being switched on, and, in a second switching position of the manual actuating element (50) in which the counterpart brake disc (24) is released from the brake disc (22), allows the drive unit (12) to be switched on,
**characterized in that** the manual actuating element (50) is designed to execute a combined switching movement comprising a first switching movement (S1), in particular in translation, between the first and second switching position and a second switching movement (S2), in particular in rotation, into a third switching position, in which the actuating element (50) is able to switch on the drive unit (12).

2. Portable electric power tool (10) according to Claim 1,
**characterized in that** the manual actuating element (50) cooperates in the third switching position with an electric switch (44) in order to switch on the drive unit (12).

3. Portable electric power tool (10) according to either of Claims 1 and 2,
**characterized in that** the switch lock (52) comprises at least one protrusion (46, 56) that counteracts a switching movement from the first switching position into the third switching position.

4. Portable electric power tool (10) according to one of Claims 1 to 3,
**characterized in that** the switch lock (52) is able to cooperate with a protrusion (46), integral with the housing, of a housing part (14) of the portable electric power tool (10) in order to prevent a switching movement from the first switching position into the third switching position.

5. Portable electric power tool (10) according to one of Claims 1 to 4,
**characterized in that** the actuating element (50) comprises at least one elastic return element (26, 60) that preloads it in the direction of its first switching position.

6. Portable electric power tool (10) according to one of Claims 1 to 5,
**characterized in that** the braking device (20), in particular the brake disc (22) and/or the counterpart brake disc (24), is arranged in the transition region (U) from the first housing part (14), in particular the handle housing, and a second housing part (16), in particular the drive housing, of the portable electric power tool (10).

7. Portable electric power tool (10) according to Claim 6,
**characterized in that** a vibration damper (18) is provided in the transition region (U) of the first housing part (14) and the second housing part (16).

8. Portable electric power tool (10) according to Claim 6 or 7,
**characterized in that** the first housing part (14) is arranged so as to be rotatable through a predefined angle with respect to the second housing part (16).

9. Portable electric power tool (10) according to one of Claims 1 to 8,
**characterized in that** the coupling device (30) comprises at least one lever (34, 36) for force transmission from the actuating element (50) to the counterpart brake disc (24).

10. Portable electric power tool (10) according to one of Claims 1 to 9,
**characterized in that** the coupling device (30) comprises at least one toggle lever (34, 36) for force transmission and force reduction from the actuating element (50) to the counterpart brake disc (24).

11. Portable electric power tool (10) according to one of Claims 1 to 9,
**characterized in that** the coupling device (30) comprises at least one coupling member (32), in particular a coupling pin, that connects the coupling device (30) to the counterpart brake disc (24).

## Revendications

1. Machine-outil à main électrique (10), notamment meuleuse d'angle ou similaire, comprenant :
une unité d'entraînement (12) comprenant un arbre d'induit pouvant être mise en fonction et hors fonction par un utilisateur au moyen d'un élément de commande manuel (50),
un dispositif de freinage (20) pour freiner l'arbre d'induit après une mise hors fonction de l'unité d'entraînement (12) avec un disque de frein (22), solidaire en rotation avec l'arbre d'induit, avec un contre-disque de frein (24) tenu de manière fixe en rotation dans une partie (16) du boîtier de la machine-outil à main électrique (10) et précontraint élastiquement par un élément de rappel élastique (26) en direction du disque de frein (22), et avec un dispositif de couplage (30) couplant l'élément de commande manuel (50) et le contre-disque de frein (24),
dans lequel l'élément de commande manuel (50) comporte un blocage de la mise en fonction (52) qui, dans une première position de commutation de l'élément de commande manuel (50), dans laquelle le contre-disque de frein (24) est en appui contre le disque de frein (22), empêche la mise en fonction de l'unité d'entraînement (12) et, dans une seconde position de commutation de l'élément de commande manuel (50), dans laquelle le contre-disque de frein (24) est éloigné du disque de frein (22), permet la mise en fonction de l'unité d'entraînement (12),
**caractérisée en ce que** l'élément de commande manuel (50) est agencé pour exécuter un mouvement de commutation combiné comprenant un premier mouvement, notamment de translation, (S1) entre la première et la seconde position de commutation et un second mouvement, notamment de rotation, (S2) vers une troisième position de commutation, dans laquelle l'élément de commande manuel (50) peut mettre l'unité d'entraînement (12) en fonction.

2. Machine-outil à main électrique (10) selon la revendication 1, **caractérisé en ce que** l'élément de commande manuel (50) coopère dans la troisième position de commutation avec un commutateur électrique (44), pour entraîner la mise en fonction de l'unité d'entraînement (12).

3. Machine-outil à main électrique (10) selon l'une des revendications 1 ou 2,
**caractérisée en ce que** le blocage de la mise en fonction (52) comprend au moins une saillie (46, 56) qui s'oppose à un mouvement de commutation depuis la première position de commutation vers la troisième position de commutation.

4. Machine-outil à main électrique (10) selon l'une des revendications 1 à 3,
**caractérisée en ce que** le blocage de la mise en fonction (52) peut coopérer avec une saillie (46) solidaire d'une partie (14) du boîtier de la machine-outil à main électrique (10) pour bloquer un mouvement de commutation depuis la première position de commutation vers la troisième position de commutation.

5. Machine-outil à main électrique (10) selon l'une des revendications 1 à 4,
**caractérisée en ce que** l'élément de commande (50) comprend au moins un élément de rappel élastique (26, 60) le rappelant en direction de sa première position de commutation.

6. Machine-outil à main électrique (10) selon l'une des revendications 1 à 5,
**caractérisée en ce que** le dispositif de freinage (20), notamment le disque de frein (22) et/ou le contre-disque de frein (24), est disposé dans la zone de transition (U) entre une première partie du boîtier (14), notamment le boîtier de la poignée, et une seconde partie du boîtier (16), notamment le boîtier de l'entraînement, de la machine-outil à main électrique (10).

7. Machine-outil à main électrique (10) selon la revendication 6,
**caractérisée en ce qu'**un amortissement des vibrations (18) est prévu dans la zone de transition (U) entre la première partie du boîtier (14) et la seconde partie du boîtier (16).

8. Machine-outil à main électrique (10) selon la revendication 6 ou 7, **caractérisée en ce que** la première partie du boîtier (14) est agencée de sorte à pouvoir tourner d'un angle prédéterminé par rapport à la deuxième partie du boîtier (16).

9. Machine-outil à main électrique (10) selon l'une des revendications 1 à 8,
**caractérisée en ce que** le dispositif de couplage (30) comprend au moins un levier (34, 36) pour la transmission de la force de l'élément de commande (50) sur le contre-disque de frein (24).

10. Machine-outil à main électrique (10) selon l'une des revendications 1 à 9,
**caractérisée en ce que** le dispositif de couplage (30) comprend au moins un levier basculant (34, 36) pour la transmission et la réduction de la force de l'élément de commande (50) sur le contre-disque de frein (24).

11. Machine-outil à main électrique (10) selon l'une des revendications 1 à 9,
**caractérisée en ce que** le dispositif de couplage (30) comprend au moins un élément de couplage (32), notamment une tige de couplage, reliant le dispositif de couplage (30) et le contre-disque de frein (24).
